Europäisches Patentamt

European Patent Office

Office européen des brevets

(19)

(11) Publication number: **0 301 623**
**A1**

## (12) EUROPEAN PATENT APPLICATION

(21) Application number: **88201419.4**

(22) Date of filing: **07.07.88**

(51) Int. Cl.4: **B01D 53/14** , **B01D 53/18** , **C07C 9/04**

(30) Priority: **14.07.87 NL 8701650**

(43) Date of publication of application:
**01.02.89 Bulletin 89/05**

(84) Designated Contracting States:
**BE DE ES FR GB IT NL**

(71) Applicant: **N.V. NEDERLANDSE GASUNIE**
**Postbus 19**
**NL-9700 MA Groningen(NL)**

(72) Inventor: **Wes, Gerrit Willem Johan**
**Goldakkers 2**
**NL-9483 PG Zeegse(NL)**
Inventor: **Hoving, Klaas**
**De Hop 20**
**NL-9301 PM Roden(NL)**

(74) .Representative: **Bleukx, Lucas Lodewijk Maria,**
**Ir. et al**
**OCTROOIBUREAU DSM Postbus 9**
**NL-6160 MA Geleen(NL)**

(54) Process for the removal of gaseous components from a gas flow.

(57) Process for removal of gaseous components from a gas flow by means of an absorbing liquid, based upon ethanolamine, using a tubular body in which the gas flow is treated in co-current with the absorbing liquid.
The process is usefull in treating natural gas for removing especially $CO_2$ and/or $H_2S$.

EP 0 301 623 A1

EP 0 301 623 A1

## PROCESS FOR THE REMOVAL OF GASEOUS COMPONENTS FROM A GAS FLOW

The invention relates to a process for the removal of gaseous components from a gas flow by means of an absorbing liquid for the gaseous components to be removed, the gas flow being supplied to one end of a tubular body, and the absorbing liquid being introduced into the gas flow near the same end and in the flow direction of the gas flow and being subsequently dragged along by the gas flow.

Such a process is known from German patent application 2908263.

In this publication there is disclosed a so-called co-current absorption process, measurements being taken to make the contact surface gas/liquid as big as possible. The measurements include i.a. a relatively low gas speed and a high injection pressure of the absorbing liquid.

Although said process is usefull for relatively small gas flows, it is rather complicated and it requires to much energy when voluminous gas flows under high pressure are involved.

Therefore the invention relates to a process of the above identified type, which is characterized in that the gas flow is a natural gas flow, in that the components to be removed at least contain $CO_2$ and/or $H_2S$ and in that the absorbing liquid is an amino-group containing liquid.

Especially for cleaning natural gas it is important that the gas flow is hindered in the least possible way during the clearing process, whereas on the other hand no extreme requirements are imposed upon the efficiency of the cleaning process itself. In most circumstances it is enough to remove some defined components to a certain degree. This is especially true for the components $CO_2$ and/or $H_2S$ for which the above described process is especially suitable.

Preferably the absorbing liquid is a alcoholamine, preferably chosen out of the group of mono-ethanolamine, di-ethanolamine or methyl-ethanolamine, reaction speed increasing components being added thereto.

In order to remove the gaseous components absorbed by the liquid from the gas flow, the flow leaving the tubular body is fed through a gas-liquid separator.

Preferably the process according to the invention is performed with a gas pressure within the tubular body between 1 and 400 bar and a gas velocity between 1 and 100 m/s.

The absorbing liquid can be supplied in various manners. It is possible to introduce the absorbing liquid into the gas flow with overpressure. To this end, use may be made of pumps, but other systems may also be used. However, it is also possible to introduce the liquid into the gas flow by means of Venturi effects.

Preferably, the liquid will be dispersed in the gas flow in the form of a spray. To this end a spraying device operating with overpressure may be used, but it is also possible to use a portion of the gas flow to convert the liquid to a spray, after which this spray is introduced into the gas flow. In a different embodiment the pressure and the velocity of the gas will be chosen such that when the liquid is introduced into the gas flow, it will become a spray spontaneously and the liquid will remain in strongly dispersed form during its passage through the tubular body.

Preferably, the absorbing liquid separated in the gas-liquid separator is regenerated and at least partly recycled. The regeneration of the liquid may be effected by a reduction in pressure and/or an increase in the temperature. A reduction in pressure will be applied particularly if the component to be removed is present in the gas flow in high concentrations and partial removal is considered sufficient. In the other case thermal regeneration will be preferred.

In order to increase absorption, the tubular body may be provided with internal impact devices. These create impact phenomena which promote mass transfer.

The geometry of the tubular body may have an effect on the process. An oblique arrangement may, for example be chosen, in which the gas flow moves upwards, so that a longer residence time of the spray is obtained. Besides this, the tubular body need not be straight, but may have one or more bends or angles. If space is a limiting factor, a spirally formed or helicoidal tubular body may be chosen. To obtain increased contact a tubular body may be used consisting of tube elements, each mounted at an angle on top of the other. This may be combined with a gas line running obliquely upwards.

Preferably, the invention is applied to gas flows with high velocities and high pressures. The velocities may be between 1 and 100 m.s, preferably between 5 and 75 m.s. Pressures in the gas flow may range from 1 to 400 bar, preferably, however, from 5 to 100 bar.

A flexible process is obtained if the gas flow is fed through a number of parallel tubular bodies. This makes it possible to treat strongly varying flows in a simple manner while retaining the same yield.

It is also possible to connect a number of tubular bodies in series, using the same or different absorbing liquids. After each absorption step a gas-liquid separation step may then take place. The advantage of this is that the absorption can thus be intensi-fied, and can be optimized each time for the

2

product to be absorbed, and that a considerable removal of the contaminants can be achieved.

For an efficient operation of the co-current scrubbing process, intensive contact must be realized between the gas and the liquid in the tubular body. The parameters of importance in this respect are:

- the pressure of the gas (P) and therefore also the density of the gas (d) and the viscosity of the gas flow ($\eta_G$);
- the velocity of the gas flow ($V_G$);
- the liquid/gas ratio ($\phi_L/\phi_G$);
- the viscosity of the absorption liquid ($\eta_L$);
- the surface tension of the absorbing liquid;
- the diameter (D) of the contact section;
- the length (L) of the contact section;
- the design/position of the tube.

By optimally adjusting these parameters to one another it is possible to obtain intensive contact between the gas and the liquid. Table 1 presents some limits of the parameters mentioned above for a charac teristic application.

The so-called 'gas-drag-force parameter' ($F_s$) has also been included in this table

$$F_s = v \, d$$

where

v = velocity of the gas (in ft/sec)

d = density of the gas (in lb/ft$^3$)

This 'gas-drag-force parameter' is one of the most important quantities for optimizing mass transfer in the co-current contact section.

TABLE 1

| Limits for a characteristic application | | |
|---|---|---|
| Parameter | Practical application limits | Characteristic application limits |
| P (bar) | 1 - 400 | 5 - 100 |
| VG (m/s) | 1 - 100 | 5 - 75 |
| $\eta$L ($10^{-3}$ Ns/m$^2$) | 0.1 - 20 | 1 - 8 |
| $\phi$L/$\phi$G (on volumetric basis) | 0.001 - 0.5 | 0.05 - 0.5 |
| D(m) | 0.01 - 3 | 0.05 - 0.30 |
| L(m) | > 1 m | 5 - 50 |
| T (¤C) | - 50 → 300 | 10 - 80 |
| $F_s$ (ft$^{-1/2}$.lb$^{1/2}$.sec$^{-1}$) | 1 - 1500 | 30 - 300 |

A high value of the gas-drag-force parameter on the one hand results in an increase in the mass transfer coefficient (on account of the high shear stresses at the gas/liquid interface) and on the other in an increase in the specific gas/liquid exchanging surface (on account of the formation of a highly disperse distribution of liquid droplets in the gas flow). Moreover, this leads to a high degree of refreshment of gas and liquid at the interface.

Example

In a co-current gas absorbing installation the length of the co-current tubular section being 15 m and the internal diameter being 0.076 m, a gas flow of 7,3 Kmol/h containing 1.0 vol.% CO$_2$ is treated. The treatment takes place at a gas pressure of 20 bar and a temperature of 28¤C. The absorbing liquid is 35% by weight solution of methyl-diethanolamine in water, to which there is added a reaction speed increasing product (4% by weight based upon MDEA). The absorbing liquid is injected into the gas flow and guided in co-current therewith along the contact section having the length of 15 m. In a gas-liquid-separator with high efficiency (> 99.96%) the absorbing liquid is separated from the gas flow. The CO$_2$-content of the gas after treatment is 0.6 vol.%.

Starting from this experiment and absorbing characteristics of the absorbing liquid used, it is proven via model calculations that a natural gas flow containing 7 vol.% of $CO_2$ (gas pressure 70 bar) can be treated to a 2 vol.% $CO_2$ by means of co-current tubular section of 50 m. The quantities of liquid needed therefor are about equal to the convential countercurrent gas absorption process, which causes a substantial pressure drop in the system

## Conventional absorption process

The aforementiond $CO_2$ removal via conventional absorption processes with MDEA as absorbing liquid is realized by bringing a gas flow into countercurrent contact with a scrubbing liquid in an absorption column.

When using such an absorption column, the actual velocity of the gas in the column may not be too high to prevent flooding. For the aforementioned gas flow of 200,000 $Nm^3/h$ at 70 bar (2857 $m^3/h$) an absorption column with an internal diameter of 3.20 m must be used at a superficial gas velocity of 0.1 m/s. øther characteristic dimensions for reducing the $CO_2$ content from 25 vol% to 3 vol% at a gas flow of 200,000 $Nm^3/h$ (70 bar) are:
- height of the column : 30 m
- height of the packing : 25 m
- 1.5" Raschig Ring packing : 200 $m^3$ ($\sim 140 . 10^3$ kg)

An indication of the costs of such a commercial absorber with packing, including installation, is approximately 7.5 million Dutch guilders.

The new co-current absorbing process can be performed in a normal gas pipe and a conventional gas-liquid-separator. The installation can be compact. In the process according to the invention there is no need for an expensive absorbing unit.

The use of the co-current scrubbing process results in a conside-rable reduction in capital investment with respect to a commercial gas separating process. Moreover, the compact design of the co-current absorption process presents the possibility of installing such an installation on, for example, off-shore platforms.

The co-current embodiment of the gas separation process also presents the great advantage that expansion or reduction of the capacity of the gas separation installation by means of the connection or disconnection of parallel-arranged tubes results in a great degree of flexibility. In addition, flow fluctuations can be easily met.

## Claims

1. Process for the removal of gaseous components from a gas flow, by means of an absorbing liquid for the gaseous components to be removed, the gas flow being supplied to one end of a tubular body, and the absorbing liquid being introduced into the gas flow near the same end and in the flow direction of the gas flow and being subsequently dragged along by the gas flow, characterized in that the gas flow is a natural gas flow, in that the components to be removed at least contain $CO_2$ and/or $H_2S$ and in that the absorbing liquid is an amino-groups containing liquid.

2. Process according to claim 1, characterized in that the absorbing liquid is an alcoholamine.

3. Process according to claim 2, characterized in that the absorbing liquid is an ethanolamine.

4. Process according to claim 3, characterized in that the absorbing liquid is an amine choosen out of the group of mono-ethanolamine, di-ethanolamine and methyl-diethanolamine or mixtures thereof.

5. Process according to any one of claims 1-4, characterized in that the gas pressure in the tubular body is between 1 and 400 bar and the gas velocity between 1 and 100 m/s.

6. Process according to any one of claims 1-5, characterized in that the tubular body is provided with internal impact devices.

7. Process according to any one of claims 1-6, characterized in that the gas flow has a pressure between 5 and 100 bar.

8. Process according to any one of claims 1-7, characterized in that the velocity of the gas is between 5 and 75 m/s.

9. Process according to any one of claims 1-8, characterized in that the tubular body is erected obliquely.

10. Process according to any one of claims 1-9, characterized in that the gas flow is fed through a number of parallel tubular bodies.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 908 263 (HOECHST AG) * Whole document * | 1-4 | B 01 D 53/14 |
| A | | 5,6,8 | B 01 D 53/18 C 07 C 9/04 |
| Y | EP-A-0 121 109 (BASF AG) * Page 8, claims 1-4; page 3, line 1 - page 4, line 24 * | 1-4 | |
| A | US-A-4 279 628 (R.L. WYMER) | | |
| A | GB-A-1 513 839 (AIR PRODUCTS AND CHEMICALS INC.) | | |
| A | FR-A-2 442 072 (E. PERCEVAUT) * Figures 1-3 * | 10 | |

TECHNICAL FIELDS
SEARCHED (Int. Cl.4)

B 01 D
C 07 C

The present search report has been drawn up for all claims

| Place of search | Date of completion of the search | Examiner |
|---|---|---|
| THE HAGUE | 09-11-1988 | PYFFEROEN K. |